Europäisches Patentamt

European Patent Office

Office européen des brevets

(11) Publication number: **0 073 581**
**B1**

(12) **EUROPEAN PATENT SPECIFICATION**

(45) Date of publication of patent specification: 06.08.86

(51) Int. Cl.⁴: **A 23 L 1/20,** A 23 K 1/14, A 23 J 1/14

(21) Application number: 82304186.8

(22) Date of filing: 09.08.82

(54) Manufacture of edible material from pulses.

(30) Priority: 11.08.81 GB 8124523

(43) Date of publication of application:
09.03.83 Bulletin 83/10

(45) Publication of the grant of the patent:
06.08.86 Bulletin 86/32

(84) Designated Contracting States:
AT BE CH DE FR GB IT LI LU NL SE

(56) References cited:
DE-A-1 692 708
DE-A-2 007 588
GB-A-2 069 309
US-A-4 022 919

Starch: Chemistry and Technology R.L.
WHISTLER et al. vol. I, pp. 106/107 and 122/123

(73) Proprietor: UNILEVER PLC
Unilever House Blackfriars P.O. Box 68
London EC4P 4BQ (GB)
(84) GB

(73) Proprietor: UNILEVER NV
Burgemeester s'Jacobplein 1 P.O. Box 760
NL-3000 DK Rotterdam (NL)
(84) BE CH DE FR IT LI LU NL SE AT

(72) Inventor: Dunckley, Martin Noel
66 Tyne Crescent
Bedford (GB)
Inventor: Evans, Phillip John
5 Dove Road
Bedford (GB)
Inventor: MacIntosh, Iain Kellar
12 Pinchmill Way
Sharnbrook Bedfordshire (GB)

(74) Representative: Butler, David John et al
Unilever PLC Patents Division P.O. Box 68
Unilever House
London EC4P 4BQ (GB)

Courier Press, Leamington Spa, England.

**Description**

The present invention relates to the manufacture of material from pulses such as peas and beans.

The invention is particularly concerned with the processing of leguminous seeds (pulses) which contain substantial amounts of starch granules. It is known that such pulses can be milled and fractionated into relatively starch-rich and protein-rich flours. Examples of common pulses to which such treatment can be applied are peas, field peas, kidney beans and lentils. Such pulses can be distinguished from other members of the *leguminosae* family in which the main energy stores is lipid rather than starch, for example soya beans and lupin seeds.

The invention provides a process for the recovery of protein-rich and starch-rich flour fractions from leguminous seeds which contain substantial amounts of starch granules, involving the steps of de-hulling, grinding and air-classifying the ground seeds into separate flour fractions, chracterised in that the protein content of the protein-rich fraction is enhanced by subjecting the seeds, prior to grinding, to a moist thermal treatment at a temperature in excess of 100°C but not exceeding 150°C, under super-atmospheric pressure.

The process of the invention can yield a protein-rich fraction of which the crude protein content is enhanced relative to that of protein-rich fractions derived by conventional methods from the same pulse starting material. It will be appreciated that different varieties and species of pulses vary widely both in their protein contents and in the relative ease with which they can be fractionated into protein-rich and starch-rich fractions. Taking any given variety of starchy pulse, however, there will generally be a significant improvement in crude protein content in a protein-rich fraction when produced according to the invention.

An additional advantage of the invention is that the starch-rich fraction will generally have an enhanced digestibility when compared to corresponding starch-rich fractions made by conventional methods from the same pulse starting material. We have demonstrated this by means of an *in vitro* test in which an enhanced rate of enzymatic starch hydrolysis was observed.

The protein-rich fraction obtained by the process of the invention typically contains at least 30%, and often at least 50%, by weight crude protein and generally has a trypsin inhibitor activity of less than 5 mg/g, and often less than 2 mg/g.

Preferably the duration and intensity of the thermal treatment should not be such that the pulses become overcooked, i.e. disintegrate into a pulp or mush. Preferably the thermal treatment is achieved by contacting the pulses with live steam. Preferably the pressure under which the thermal treatment is conducted exceeds atmospheric pressure by from 7 to 345 kPa (1 to 50 psig). Preferably the thermal treatment is conducted for from 1 to 60 minutes.

An ideal method for physically classifying the ground pulses is air-classification. Indeed, we believe that it is a particular advantage of the invention that moist thermal treatment of pulses leads to improved efficiency in a subsequent air classification.

In order for the physical classification of the ground pulses into protein-rich and starch-rich fractions to be conducted efficiently, the treated material must be ground to an appropriately small particle size. We have found that for optimum air-classification of this material, it should be milled such that at least 50%, and preferably at least 70%, by weight of the material can pass through a 45 micrometre (micron) sieve. This milling can be effected using conventional equipment, such as pin mills.

Preferably the pulses should be de-hulled after the thermal treatment but prior to milling, as this increases the efficiency of the milling operation. Moreover, de-hulling pulses tend to stick together during the thermal treatment, which is inconvenient for subsequent processing. De-hulling can be conducted using conventional equipment.

In a particularly preferred process according to the invention, whole peas/beans are autoclaved at a temperature of 110 to 125°C and a pressure exceeding atmospheric by from 34 to 138 kPa (5 to 20 psig), for a period of 5 to 30 minutes, the autoclaved peas/beans are dried (preferably to a moisture content in the range of 8 to 13% by weight), de-hulled and milled (preferably such that at least 70% by weight of the milled material passes a 45 micrometre (micron) sieve), and the milled material is air-classified to separate therefrom at least one protein-rich fraction.

A protein-rich pulse fraction obtained by the process of the invention can be used as an ingredient in foods for humans or animals. In particular it can be used to enhance the protein content of compound animal feeds when blended with conventional feed ingredients such as cereals (for example oats, barley, rice, rye, wheat and maize), oil seed meal (for example groundnut, rape, mustard, sunflower and soya), fibrous matter (for example hay, straw, potato pulp, beet pulp and citrus pulp), other proteinaceous materials (for example fish meal), lipids (for example vegetable oils, tallows and fish oils), and various mineral and vitamin sources.

The invention is illustrated by the following examples.

Example 1

A batch of whole peas (variety MARO) was divided into seven identical samples identified as A to G.

Samples A and B were processed according to the invention. Samples C to G were subjected to alternative processes for the purposes of comparison.

Sample A was placed in an autoclave and exposed to live steam at a temperature of 116°C and a pressure above atmospheric of 69 kPa (10 psig) for a period of 10 minutes. After autoclaving, the peas had a moisture content of about 20% by weight and this was reduced to about 8% by weight by drying in an oven at 50°C. Following drying, the hulls of the peas were removed using a conventional de-huller and the de-hulled peas were coarsely ground in a Christie-Norris hammer mill using a 1 mm screen, and the finely milled in a KEK pin mill, with an 18 cm (7 inch) horizontal disc fitted with square studs, run at 9600 rpm. 76% by weight of the milled peas passed through a 45 micrometre (micron) sieve. The milled material was separated into a fine fraction and a coarse fraction using an Alpine "Multiplex A 100 MZR" (Registered Trade Mark) laboratory air classifier operated at a rotor speed of 7000 rpm with maximum air flow. The fine (protein-rich) fraction was subjected to analysis for its crude protein content and its trypsin inhibitor activity (TIA) using standard analytical procedures.

Sample B was treated in a manner identical to that applied to sample A except that the autoclaing was conducted for 15 minutes instead of 10 minutes.

The remaining samples were subjected to the following procedures.

Sample C: the peas were not subjected to any heat treatment whatsoever, and the raw peas were de-hulled, milled and air-classified using the same conditions as applied to samples A and B.

Samples D and E were both subjected to a microwave heating treatment instead of the autoclaving. In the case of sample D the microwave treatment was conducted for 22 minutes, and in the case of sample E the period was 25 minutes. In both cases the treatment was conducted in a Mercury "955" (Registered Trade Mark) laboratory microwave oven, and heating was carried out in periods of 1 minute for the first 10 minutes and then for 2-minute periods thereafter. Stirring was performed between each heating to prevent the formation of "hot spots". Following the microwave treatment both samples were de-hulled, milled and air-classified using the same procedure as described above.

TABLE I

| Sample | Thermal treatment | Crude protein content of fine fraction (% by weight) | Trypsin inhibitor activity (mg/g) |
|---|---|---|---|
| A | Autoclave 116°C, 69 kPa (10 psig), 10 minutes | 59.1 | 1.5 |
| B | Autoclave 116°C, 69 kPa (10 psig), 15 minutes | 58.6 | 1.5 |
| C | None | 56.8 | 18.2 |
| D | Microwave, 22 minutes | 56.8 | 6.6 |
| E | Microwave, 25 minutes | 54.8 | 5.0 |
| F | Dry oven, 150°C 45 minutes | 56.9 | 11.5 |
| G | Dry oven, 150°C 60 minutes | 55.2 | 11.7 |

Samples F and G were subjected to dry oven heating instead of autoclaving. Both samples were heated in a thin layer in a shallow aluminium tray at 150°C. In the case of sample F the period was 45 minutes, and in the case of sample G the period was 60 minutes. Following the dry oven heating the samples were de-hulled, milled and air-classified using the identical procedure as applied to the other samples.

The analytical results for each sample are given in Table I, which shows that the process according to the invention (samples A and B) enhanced the crude protein content of the fine fraction.

As can also be seen from Table I, the process according to the invention (samples A and B) led to a very low level of trypsin inhibitor activity in the protein concentrate at 1.5 mg/g. By way of comparison, the raw peas produced a protein concentrate having a trypsin inhibitor activity of 18.2 mg/g. The dry oven treatment reduced this to approximately 11.5 mg/g, and the microwave treatment reduced this to 5 mg/g at best.

Example 2

This example demonstrates the enhancement of protein content associated with applying moist thermal treatment to peas prior to milling and air classifying.

A sample of peas (variety MARO) was exposed to live steam at 116°C and 69 kPa (10 psig) for 30

3

minutes. The final moisture content of the peas was 20% by weight, and this was reduced to about 8% by air-drying at about 50°C. The dried peas were de-hulled, milled in an Alpine "Contraplex 250 CW" (Registered Trade Mark) pin mill, and the air-classified in an Alpine "Mikroplex 400 MPS;; (Registered Trade Mark) classifier.

A second sample of the same peas was treated in an identical manner, except that no steaming was applied and the classification was conducted in an Alpine laboratory air classifier as used in Example 1. Experience has shown, however, that the process is relatively insensitive to the type of classifier employed, and so any major differences in the final product will be due primarily to the presence or absence of steaming, which is the only other variable.

On analysis, the protein-rich fractions had the following properties:

|  | Air-classified protein-rich fraction | |
| --- | --- | --- |
|  | Yield (%) | Protein (%) |
| With thermal treatment | 19.4 | 67 |
| No thermal treatment | 19.5 | 59 |

These results indicate that the process involving moist thermal treatment of the whole peas led to a substantially higher concentration of protein in the protein-rich fraction, with no loss of yield.

## Claims

1. A process for the recovery of protein-rich and starch-rich flour fractions from leguminous seeds which contain substantial amounts of starch granules, involving the steps of de-hulling, grinding and air-classifying the ground seeds into separate flour fractions, characterised in that the protein content of the protein-rich fraction is enhanced by subjecting the seeds, prior to grinding, to a moist thermal treatment at a temperature in excess of 100°C but not exceeding 150°C, under super-atmospheric pressure.

2. A process according to claim 1, characterised in that the thermal treatment is applied to the seeds prior to de-hulling.

3. A process according to claim 1 or claim 2, characterised in that the thermal treatment is conducted at a pressure exceeding atmospheric pressure by from 7 to 345 kPa (1 to 50 psig).

4. A process according to any one of claims 1 to 3, characterised in that the thermal treatment is conducted for from 1 to 60 minutes.

5. A process according to any one of claims 1 to 4, characterised in that the thermal treatment is conducted in an autoclave.

6. A process according to claim 1, characterised by the steps of autoclaving whole peas or beans at a temperature of 110 to 125°C and a pressure exceeding atmospheric pressure by from 34 to 138 kPa (5 to 20 psig) for a period of 5 to 30 minutes, drying the autoclaved peas or beans to a moisture content in the range 8 to 13% by weight, de-hulling and milling the dried peans or beans such that at least 70% by weight of the milled material can pass through a 45 micrometre sieve, and air-classifying the milled material to separate therefrom at least one protein-rich flour fraction.

## Revendications

1. Procédé de récupération de fractions de farine riche en protéines et de farine riche en amidon à partir de graines légumineuses qui contiennent des quantités importantes de grains d'amidon, faisant intervenir les étapes d'écossage, de broyage et de classification pneumatique des graines broyées en fractions de farine séparées, caractérisé en ce qu'on améliore la teneur en protéines de la fraction riche en protéines en soumettant les graines, avant le broyage, à un traitement thermique humide à une température supérieure à 100°C mais ne dépassant pas 150°C, sous une pression aupraatmosphérique.

2. Procédé selon la revendication 1, caractérisé en ce qu'on applique le traitement thermique aux graines avant l'écossage.

3. Procédé selon la revendication 1 ou 2, caractérisé en ce que le traitement thermique est effectué sous une pression dépassant la pression atmosphérique de 7 à 345 kPa (1 à 50 psig).

4. Procédé selon l'une quelconque des revendications 1 à 3, caractérisé en ce que le traitement thermique est effectué pendant 1 à 60 minutes.

5. Procédé selon l'une quelconque des revendications 1 à 4, caractérisé en ce que le traitement thermique est effectué dans un autoclave.

6. Procédé selon la revendication 1, caractérisé par les étapes de passage à l'autoclave de pois ou haricots entiers à une température de 110 à 125°C et sous une pression dépassant la pression atmosphérique de 34 à 138 kPa (5 à 20 psig) pendant une durée de 5 à 30 minutes, séchage des pois ou haricots passés à l'autoclave jusqu'à une teneur en eau de 8 à 13% en poids, écossage et broyage des pois ou haricots séches de telle manière qu'au moins 70% en poids de la matière broyée puisse traverser un tamis de 45 micromètres et classification pneumatique de la matière broyée pour en séparer au moins une fraction de farine riche en protéines.

**Patentansprüche**

1. Verfahren zur Gewinnung von proteinreichen und stärkereichen Mehlfraktionen aus Leguminosensamen, die erhebliche Anteile an Stärkegranülen enthalten, das die Schritte des Enthülsens, Mahlens und Windsichtens der gemahlenen Samen zu getrennten Mehlfraktionen umfaßt, dadurch gekennzeichnet, daß der Proteingehalt der proteinreichen Fraktion erhöht wird, indem die Samen vor dem Mahlen einer feuchten Wäarmebehandlung bei einer Temperatur von mehr als 100°C, aber nicht über 150°C, unter Überatmosphärendruck unterworfen werden.

2. Verfahren nach Anspruch 1, dadurch gekennzeichnet, daß die Wärmebehandlung auf die Samen vor dem Enthülsen angewandt wird.

3. Verfahren nach Anspruch 1 oder Anspruch 2, dadurch gekennzeichnet, daß die Wärmebehandlung bei einem Atmosphärendruck um 7 bis 345 kPa übersteigenden Druck durchgeführt wird.

4. Verfahren nach einem der Ansprüche 1 bis 3, dadurch gekennzeichnet, daß die Wärmebehandlung während 1 bis 60 min durchgefährt wird.

5. Verfahren nach einem der Ansprüche 1 bis 4, dadurch gekennzeichnet, daß die Wäarmebehandlung in einem Autoklaven durchgeführt wird.

6. Verfahren nach Anspruch 1, gekennzeichnet durch die Schritte der Behandlung von ganzen Erbsen oder Bohnen in einem Autoklaven bei einer Temperatur von 110 bis 125°C und einem Atmosphärendruck um 34 bis 138 kPa äbersteigenden Druck während eines Zeitraumes von 5 bis 30 min, des Trocknens der im Autoklaven behandelten Erbsen oder Bohnen auf einen Feuchtigkeitsgehalt im Bereich von 8 bis 13 Gew.%, des Enthülsens und Mahlens der getrockneten Erbsen oder Bohnen derart, daß mindesten 70 Gew.% des gemahlenen Materials durch ein 45 µm-Sieb hindurchgehen können, und des Windsichtens des gemahlenen Materials, um davon mindestens eine proteinreiche Fraktion abzutrennen.